# EUROPÄISCHE PATENTSCHRIFT

(11) **EP 4 122 311 B1**
(45) Veröffentlichungstag und Bekanntmachung des Hinweises auf die Patenterteilung: **04.03.2026**
(21) Anmeldenummer: 22186048.9
(22) Anmeldetag: 20.07.2022
(51) Int. Cl.: A01D 78/10

(54) **KREISELSCHWADER**
ROTARY RAKE
ANDAINEUSE ROTATIVE

(30) Priorität: 23.07.2021 DE 102021119091
(43) Veröffentlichungstag der Anmeldung: 25.01.2023
(73) Patentinhaber: CLAAS Saulgau GmbH, 88348 Bad Saulgau (DE)
(72) Erfinder: Beyrle, Michael, 88521 Ertingen (DE); Schupp, Raphael, 88099 Neukirch (DE); Schelkle, Roland, 88348 Bad Saulgau (DE)

(56) Entgegenhaltungen:
- EP-B1- 0 290 059
- FR-A1- 2 663 189
- US-B2- 6 945 024

## Beschreibung

Die Erfindung betrifft einen Kreiselschwader nach dem Oberbegriff des Anspruchs 1.

Aus der Praxis sind Heuwerbungsmaschinen hinlänglich bekannt. So sind als Schwader sowie als Wender ausgebildete Heuwerbungsmaschinen bekannt. Bei der erfindungsgemäßen Heuwerbungsmaschine handelt es sich um einen Kreiselschwader, der bereits abgemähtes Erntegut, wie beispielsweise Gras o.ä., zu einem Schwad zusammenrecht.

FR 2 663 189 A1 offenbart einen Kreiselschwader. Der Kreiselschwader verfügt über ein Grundgestell mit einem Längsholm sowie mit Auslegerarmen, die am Längsholm angeordnet sind. Am Längsholm des Grundgestells greift eine Zugdeichsel an, über welche der Kreiselschwader an ein Zugfahrzeug koppelbar ist.

Zu beiden Seiten des Längsholms greift am jeweiligen Auslegerarm ein Rechkreisel an, der Zinkenarme und Rechzinken aufweist. An dem Längsholm greift weiterhin zwischen der Zugdeichsel und den Auslegerarmen bzw. zwischen der Zugdeichsel und den Rechkreiseln ein Schwadwender an, wobei der Schwadwender zu beiden Seiten des Längsholms jeweils ein Rechrad aufweist.

Hiervon ausgehend liegt der vorliegenden Erfindung die Aufgabe zugrunde, einen neuartigen Kreiselschwader zu schaffen.

Diese Aufgabe wird durch einen Kreiselschwader nach Anspruch 1 gelöst.

Erfindungsgemäß weist der Schwadwender zu beiden Seiten des Längsholms jeweils ein erstes Rechrad mit einem ersten Durchmesser und ein zweites Rechrad mit einem zweiten Durchmesser, der größer als der erste Durchmesser ist, auf. Beim erfindungsgemäßen Kreiselschwader ist demnach zu beiden Seiten des Längsholms jeweils das erste Rechrad mit dem ersten Durchmesser und das zweite Rechrad mit dem zweiten Durchmesser vorhanden, wobei der zweite Durchmesser größer als der erste Durchmesser ist. Hierdurch kann bei minimalem Bauraumbedarf des Schwadwenders die Wendeleistung desselben erhöht werden.

Vorzugsweise ist in Längsrichtung des Längsholms gesehen das jeweilige zweite Rechrad zumindest abschnittsweise zwischen dem jeweiligen ersten Rechrad und den Auslegerarmen angeordnet. Dies ist besonders bevorzugt, um bei minimalem Bauraumbedarf des Schwadwenders die Wendeleistung desselben zu erhöhen.

Vorzugsweise ist in Längsrichtung des Längsholms gesehen das jeweilige erste Rechrad unterhalb des Längsholms angeordnet. Hierdurch kann der Bauraumbedarf des Schwadwenders weiter reduziert werden.

Vorzugsweise sind an der gleichen Seite des Längsholms angeordnete Rechräder mit teilweiser Überlappung parallel zueinander ausgerichtet. An unterschiedlichen Seiten des Längsholms angeordnete Rechräder sind in Richtung auf die Auslegerarme divergierend ausgerichtet. Hierdurch kann bei minimalem Bauraumbedarf eine effiziente Schwadwendung gewährleistet werden.

Gemäß einer weiteren Ausführungsform können die Rechräder zusätzlich auch mit der Vertikalen einen Winkel einschließen - also schräg gestellt sein. In Richtung auf einen Untergrund sind die schräggestellten Rechräder konvergierend ausgerichtet. Durch die Schrägstellung der Rechräder gegenüber der Hochrichtung kann der Bauraumbedarf verringert werden.

Vorzugsweise greift eine Drehachse für das jeweilige zweite Rechrad über einen Lenker an dem Längsholm oder an der Zugdeichsel an, insbesondere ist die Drehachse für das jeweilige zweite Rechrad über den jeweiligen Lenker gezogen und federentlastet angelenkt. Eine Drehachse für das jeweilige erste Rechrad greift über einen weiteren Lenker an der Drehachse für das jeweilige zweite Rechrad an, wobei die Drehachse für das jeweilige erste Rechrad über den jeweiligen Lenker geschoben und federentlastet angelenkt ist. Dies erlaubt eine vorteilhafte, unabhängige Bodenanpassung der Rechräder.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen erfindungsgemäßen Kreiselschwader in einer Ansicht von unten,
- Fig. 2: ein Detail der Fig. 1,
- Fig. 3: ein Detail der Fig. 2,
- Fig. 4: das Detail der Fig. 3 von schräg hinten,
- Fig. 5: das Detail der Fig. 3 in einer ersten Seitenansicht
- Fig. 6: das Detail der Fig. 3 in einer zweiten Seitenansicht,
- Fig. 7: ein Detail der Fig. 3,
- Fig. 8: ein weiteres Detail der Fig. 3,
- Fig. 9: ein Rechrad in perspektivischer Ansicht,
- Fig. 10: ein Detail der Fig. 9,
- Fig. 11: ein Detail der Fig. 9.

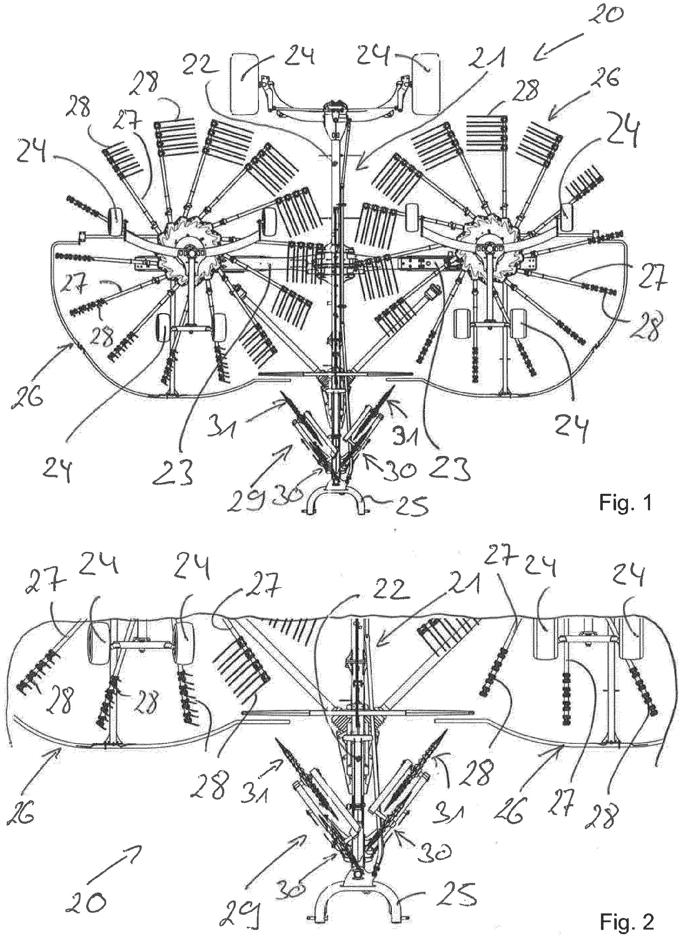

Fig. 1 zeigt eine Ansicht von unten eines erfindungsgemäßen Kreiselschwaders 20. Der Kreiselschwader 20 verfügt über ein Grundgestell 21, welches einen Längsholm 22 sowie zu beiden Seiten des Längsholms 22 positionierte und am Längsholm 22 angreifende Auslegerarme 23 aufweist.

Über Stützräder 24 stützt sich der Kreiselschwader 20 auf einem zu bearbeitenden Untergrund ab. Über eine am Längsholm 22 angreifende Zugdeichsel 25 ist der Kreiselschwader 20 an ein Zugfahrzeug koppelbar.

Der Kreiselschwader 20 verfügt weiterhin über Rechkreisel 26. An jedem der Auslegerarme 23 greift jeweils ein Rechkreisel 26 an. Im gezeigten Ausführungsbeispiel ist zu beiden Seiten des Längsholms 22 jeweils ein Rechkreisel 26 angeordnet, der an einem entsprechende Auslegerarm 23 gelagert ist. Jeder Rechkreisel 26 verfügt über mehrere Zinkenarme 27 mit an den Zinkenarmen 27 angreifenden Rechzinken 28. Der gezeigte Kreiselschwader 20 ist ein Schwader mit Mittenablage.

Da die Rechzinken 27 zur Mitte bzw. zum Längsholm 22 hin vom Boden abgehoben werden, können diese das dort liegende Erntegut nicht erfassen. Dieses Erntegut bleibt somit unbewegt am Boden liegen und das von den Außenseiten zur Mitte gerechte Erntegut wird darauf abgelegt. Bei einem nachfolgenden Ernteprozess, bei dem das Erntegut vom Boden aufgenommen werden soll, kann das unbewegte Erntegut, von den Aufnahmeeinrichtungen, wie beispielsweise Pick-ups, meist nicht gut erfasst werden und es bleiben Reste auf dem Feldboden zurück. Die Aufnehmbarkeit des unbewegten Ernteguts verschlechtert sich noch weiter, wenn dieses parallel zur Ernterichtung bzw. zur Fahrtrichtung der Mähmaschine ausgerichtet auf dem Boden liegt.

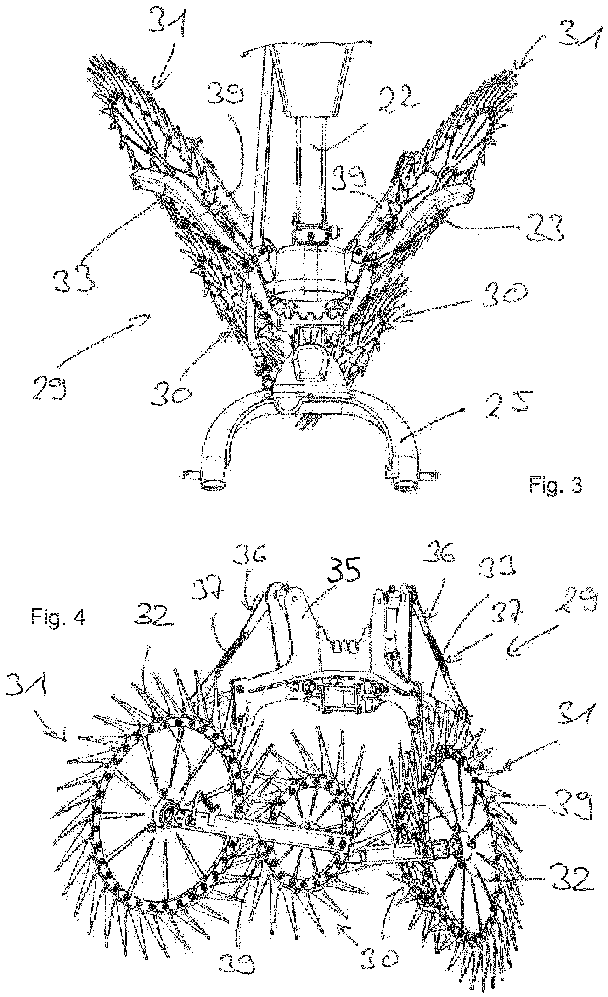

Der Kreiselschwader 20 verfügt weiterhin über einen Schwadwender 29. Fig. 3 bis 8 zeigen unterschiedliche Ansichten und Ausschnitte des Schwadwenders 29 des erfindungsgemäßen Kreiselschwaders 20. Schwadwender 29 werden in Fachkreisen teilweise auch als Swath Turner bezeichnet. Schwadwender 29 bzw. Swath Turner können das mittig liegende Erntegut erfassen und bewegen es zur Seite oder rechen es aus Grasstoppeln heraus, in welchen sich das gemähte Erntegut verfangen haben kann. Dadurch kann das danach mit den Rechkreiseln 26 zu einem Schwad zusammengelegte Erntegut besser aufgenommen werden und es bleibt weniger Erntegut auf dem Feldboden zurück.

Beim erfindungsgemäßen Kreiselschwader 20 weist der Schwadwender 29 zu beiden Seiten des Längsholms 22 jeweils ein erstes Rechrad 30 mit einem ersten Durchmesser und jeweils ein zweites Rechrad 31 mit einem zweiten Durchmesser auf, wobei der zweite Durchmesser des zweiten Rechrads 31 größer ist als der erste Durchmesser des ersten Rechrads 30.

In Längsrichtung des Längsholms 22 gesehen, der in Fig. 4, 5 und 6 nicht sichtbar ist, ist das jeweilige zweite Rechrad 31 mit dem größeren zweiten Durchmesser zumindest abschnittsweise zwischen dem jeweiligen ersten Rechrad 30 und den Auslegerarmen 23 bzw. den Rechkreiseln 26 angeordnet.

Es kann vorgesehen sein, dass in Längsrichtung des Längsholms 22 gesehen das jeweilige erste Rechrad 30 mit dem kleineren ersten Durchmesser zwischen dem jeweiligen zweiten Rechrad 31 und der Zugdeichsel 25 angeordnet ist.

Insbesondere bei sogenannten unten angehängten - also beispielsweise an den Unterlenkern eines Dreipunktkrafthebers eines landwirtschaftlichen Zugfahrzeugs angehängten - Kreiselschwadern 20 ist der Längsholm 22 zur tiefer liegenden Zugdeichsel 25 hin nach unten gebogen und damit in diesem vorderen Bereich tiefer angeordnet.

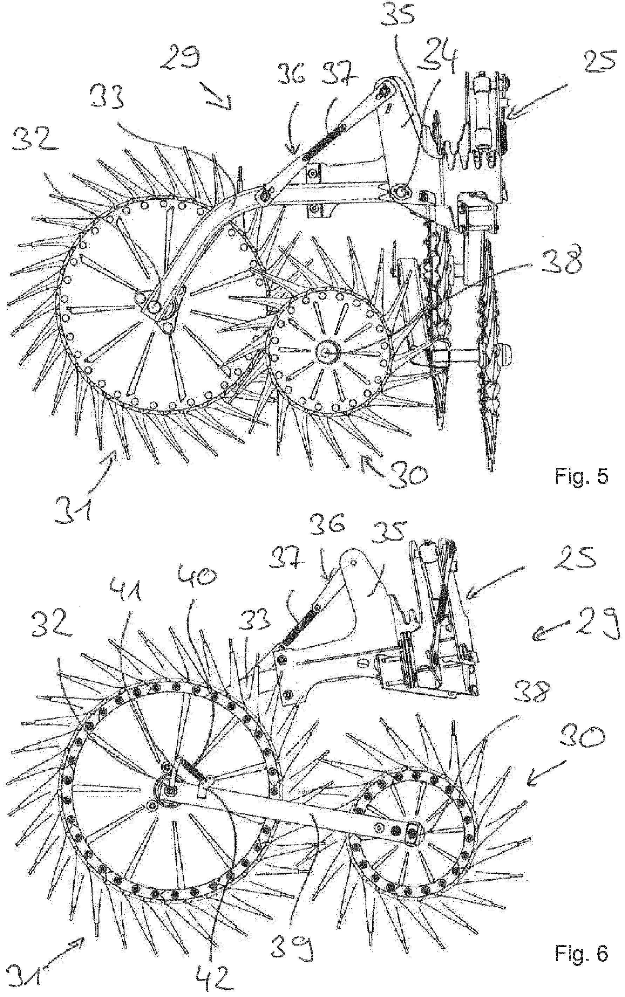

Im gezeigten, bevorzugten Ausführungsbeispiel ist in Längsrichtung des Längsholms 22 gesehen das jeweilige erste Rechrad 30 mit dem kleineren ersten Durchmesser unterhalb des tieferliegenden Teils des Längsholms 22 angeordnet. Siehe hierzu insbesondere Fig. 5 und 6.

Bei dem erfindungsgemäßen Kreiselschwader 20 verfügt der Schwadwender 29 bei geringem Bauraumbedarf über eine hohe Wendeleistung, was darin begründet ist, dass zu beiden Seiten des Längsholms 22 die beiden Rechräder 30, 31 mit den unterschiedlichen Durchmessern angeordnet sind. Vorzugsweise ist, wie im bevorzugten Ausführungsbeispiel, das jeweilige erste Rechrad 30 unterhalb des Längsholms 22 angeordnet, wodurch ein minimaler Bauraumbedarf besteht.

Eine Drehachse 32 für das jeweilige zweite Rechrad 31 ist über einen vorzugsweise gekrümmten Lenker 33 am Längsholm 22 angelenkt. Der jeweilige Lenker 33 ist dabei um eine Schwenkachse 34 relativ zum Längsholm 22 schwenkbar. Dabei ist die Drehachse 32 des jeweiligen zweiten Rechrads 31 über den jeweiligen Lenker 33 gezogen und federentlastet an der Zugdeichsel 25 angelenkt, wobei sich gemäß Fig. 5 zwischen dem Lenker 33 und einem Abschnitt 35 der Zugdeichsel 25 ein Koppellenker 36 mit einem Federelement 37 erstreckt.

Beim Abrollen der zweiten Rechräder 31 auf den zu bearbeitenden Untergrund wird so die jeweilige Drehachse 32 derselben in Fahrtrichtung nach vorne gezogen. Über die Feder 37 kann eine Bodenanpassung für die zweiten Rechräder 31 gewährleistet werden.

Eine Drehachse 38 des jeweiligen ersten Rechrads 30 ist über einen jeweiligen Lenker 39 an der Drehachse 32 des jeweiligen zweiten Rechrads 31, welches zusammen mit dem jeweiligen ersten Rechrad 30 auf der gleichen Seite des Längsholms 22 angeordnet ist, angelenkt, wodurch dann, wenn die Rechräder 30, 31 auf dem zu bearbeitenden Untergrund abrollen, die Drehachsen 38 der ersten Rechräder 30 in Fahrtrichtung nach vorne geschoben werden.

Der jeweilige Lenker 39, über welchen die Drehachse 38 des jeweiligen ersten Rechrads 30 an der Drehachse 32 des jeweiligen zweiten Rechrads 31 angreift, ist um die Drehachse 32 des jeweiligen zweiten Rechrads 31 schwenkbar, und zwar federentlastet über ein Federelement 40, welches an zwei Hebeln 41, 42 angreift. Ein erster Hebel 41 greift dabei drehfest an der Drehachse 32 des jeweiligen zweiten Rechrads 31 an, ein zweiter Hebel 42 ist fest mit dem jeweiligen Lenker 39 verbunden. Hierdurch kann eine federentlastete, unabhängige Bodenanpassung für das jeweilige erste Rechrad 30 bereitgestellt werden.

Die an der gleichen Seite des Längsholms 22 angeordneten Rechräder 30, 31 sind jeweils parallel zueinander mit teilweiser Überlappung ausgerichtet.

Die an unterschiedlichen Seiten des Längsholms 22 angeordneten Rechräder 30, 31 sind in Richtung auf die Auslegerarme 23 V-förmig divergierend (siehe insbesondere Fig. 1, 2 und 3) ausgerichtet.

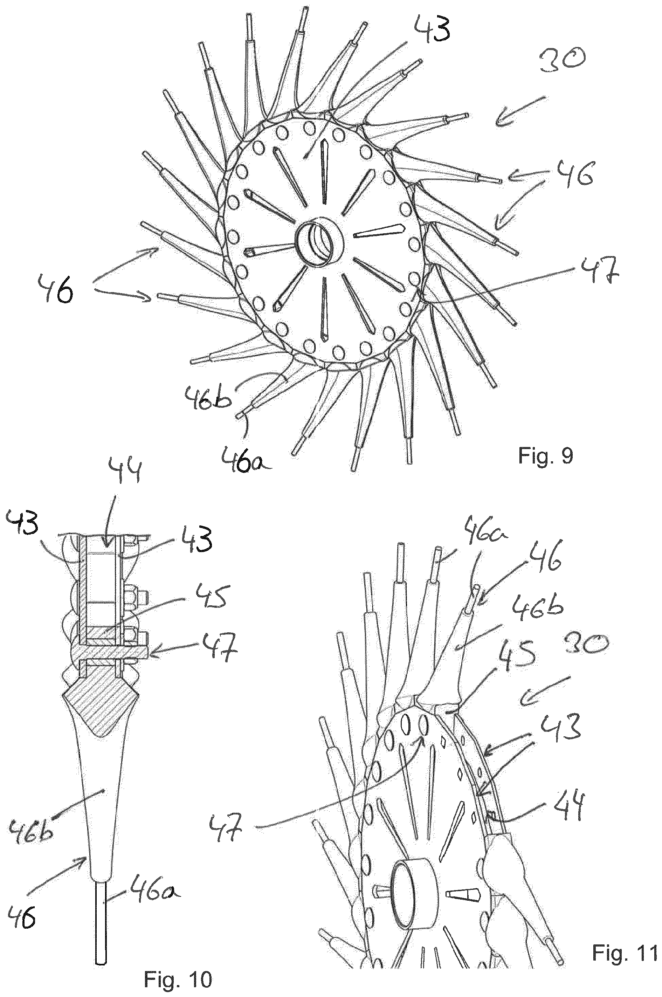

Fig. 9, 10 und 11 zeigen Details eines ersten Rechrads 30, wobei die zweiten Rechräder 31 analog aufgebaut sind. So verfügt das Rechrad 30 gemäß Fig. 9, 10 und 11 über zwei parallel zueinander positionierte Scheiben 43. Die beiden Scheiben 43 sind dabei mit Abstand zueinander angeordnet, sodass zwischen denselben ein Spalt 44 ausgebildet ist.

In diesen Spalt 44 ragen mit einem Befestigungsabschnitt 45 Rechzinken 46 des Rechrads 30 hinein, die individuell über Schraubverbindungen 47 mit den Scheiben 43 verbunden sind. Jeder Rechzinken 46 verfügt dabei über den jeweiligen Zinken 46a und einen Halter 46b für den jeweiligen Zinken 46a, wobei gemäß Fig. 10 der jeweilige Zinken 46a im Querschnitt rund ausgeführt ist. Die Schraubverbindungen 47 erstrecken sich durch die Halter 46b.

Gemäß einem weiteren Ausführungsbeispiel ist an einem Rechrad 30, 31 nur eine Scheibe 43 vorgesehen, die an der dem Erntegut zugewendeten Seite angeordnet ist. An der vom Erntegut abgewendeten Rückseite des Rechrades 30, 31 ist ein Kreisring montiert, der vorzugsweise in mehrere Segmente unterteilt ist. Dies erleichtert vorteilhaft den Austausch einzelner Rechzinken 46.

Im gezeigten, bevorzugten Ausführungsbeispiel verfügt demnach der Schwadwender 29 über insgesamt vier Rechräder 30, 31, nämlich zu beiden Seiten des Längsholms 22 über jeweils ein erstes Rechrad 30 mit dem relativ kleinen Durchmesser und ein zweites Rechrad 31 mit dem relativ großen Durchmesser. Die ersten Rechräder 30 sind in geschobener, federentlasteter Anlenkung an den zweiten Rechrädern 31 angelenkt. Die zweiten Rechräder 31 sind in gezogener, federentlasteter Anlenkung am Längsholm 22 oder an der Zugdeichsel 25 angelenkt. Die ersten Rechräder 30 sind in ihrer Arbeitsposition vorzugsweise unterhalb des tieferliegenden Längsholms 22 positioniert. Die zu unterschiedlichen Seiten des Längsträgers 22 angeordneten Rechräder 30, 31 sind in Längsrichtung gesehen V-förmig zueinander schräggestellt.

Gemäß einem weiteren Ausführungsbeispiel können die Rechräder 30, 31 zusätzlich auch mit der Vertikalen einen Winkel einschließen - also schräg gestellt sein. Bei diesem Ausführungsbeispiel sind die zu unterschiedlichen Seiten des Längsträgers 22 angeordneten Rechräder 30, 31 sowohl in Längsrichtung gesehen als auch in Hochrichtung gesehen V-förmig zueinander schräggestellt.

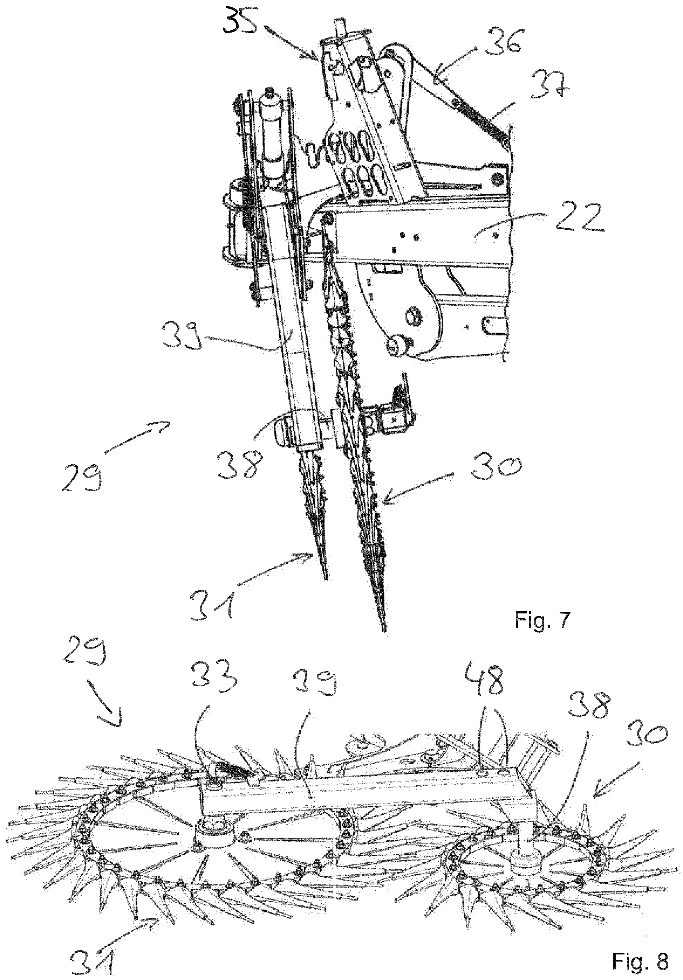

Die Überlappung der ersten Rechräder 30 zueinander sowie mit den zweiten Rechrädern 31 kann angepasst werden. Hierzu sind an dem Lenker 39 unterschiedliche Anbindungspunkte 48 (siehe Fig. 8) vorgesehen, mithilfe derer das jeweilige erste Rechrad 30 mit unterschiedlichem Abstand zur Drehachse 33 des jeweiligen zweiten Rechrads 31 am jeweiligen Lenker 39 montiert werden kann.

Statt an dem beispielhaft dargestellten Kreiselschwader 20 mit zwei Rechkreiseln 26 kann ein erfindungsgemäßer Schwadwender 29 selbstverständlich auch an einem Schwader mit mehr Rechkreiseln angeordnet werden - beispielsweise an einem Kreiselschwader mit 4 oder 6 Rechkreiseln 26.

Der erfindungsgemäße Kreiselschwader 20 kann derart ausgeführt sein, dass die Rechkreisel 26 und die Rechräder 30, 31 jeweils zusammen und demnach synchron zwischen einer Arbeitsstellung und einer Vorgewendestellung und/oder Transportstellung verlagerbar sind. Alternativ ist es auch möglich, die Rechkreisel 26 und die Rechräder 30, 31 unabhängig voneinander zu verlagern und so unabhängig voneinander ausgehend von ihrer jeweiligen Arbeitsposition in die Vorgewendestellung und/oder die Transportstellung zu verlagern.

### Bezugszeichenliste

- 20: Kreiselschwader
- 21: Grundgestell
- 22: Längsholm
- 23: Auslegerarm
- 24: Stützrad
- 25: Zugdeichsel
- 26: Rechkreisel
- 27: Zinkenarm
- 28: Rechzinken
- 29: Schwadwender
- 30: Rechrad
- 31: Rechrad
- 32: Drehachse
- 33: Lenker
- 34: Schwenkachse
- 35: Abschnitt
- 36: Koppellenker
- 37: Federelement
- 38: Drehachse
- 39: Lenker
- 40: Federelement
- 41: Hebel
- 42: Hebel
- 43: Scheiben
- 44: Spalt
- 45: Befestigungsabschnitt
- 46: Rechzinken
- 46a: Zinken
- 46b: Halter
- 47: Schraubverbindung
- 48: Anbindungspunkt

## Patentansprüche

1. Kreiselschwader (20),
mit einem einen Längsholm (22) sowie zu beiden Seiten des Längsholms (22) angeordnete Auslegerarme (23) umfassenden Grundgestell (21), wobei der Kreiselschwader über eine am Längsholm (22) angreifende Zugdeichsel (25) an ein Zugfahrzeug koppelbar ist,
mit um eine jeweilige Kreiselachse umlaufend angetriebenen, Zinkenarme (27) mit Rechzinken (28) aufweisenden Rechkreiseln (26), die an den Auslegerarmen (23) gelagert sind,
mit einem am Längsholm (22) zwischen der Zugdechsel (25) und den Auslegerarmen (23) angreifenden, Rechräder (30, 31) aufweisenden Schwadwender (29), wobei
der Schwadwender (29) zu beiden Seiten des Längsholms (12) jeweils ein erstes Rechrad (30) mit einem ersten Durchmesser aufweist, **dadurch gekennzeichnet, dass** der Schwadwender (29) jeweils ein zweites Rechrad (31) mit einem zweiten Durchmesser, der größer als der erste Durchmesser ist, aufweist.

2. Kreiselschwader nach Anspruch 1, **dadurch gekennzeichnet, dass** in Längsrichtung des Längsholms (22) gesehen die zweiten Rechräder (31) zumindest abschnittsweise zwischen den ersten Rechräden (30) und den Auslegerarmen (23) angeordnet sind.

3. Kreiselschwader nach Anspruch 1 oder 2, **dadurch gekennzeichnet, dass** in Längsrichtung des Längsholms (22) gesehen die ersten Rechräder (30) zumindest abschnittsweise zwischen den zweiten Rechrädern (31) und der Zugdeichsel (25) angeordnet sind.

4. Kreiselschwader nach Anspruch 1 bis 3, **dadurch gekennzeichnet, dass** in Längsrichtung des Längsholms (22) gesehen die ersten Rechräder (30) unterhalb des Längsholms (22) angeordnet sind.

5. Kreiselschwader nach einem der Ansprüche 1 bis 4, **dadurch gekennzeichnet, dass** eine Drehachse (32) für das jeweilige zweite Rechrad (31) über einen Lenker (33) an dem Längsholm (22) angreift.

6. Kreiselschwader nach Anspruch 5, **dadurch gekennzeichnet, dass** die Drehachse (32) für das jeweilige zweite Rechrad (31) über den jeweiligen Lenker (33) gezogen und federentlastet angelenkt ist.

7. Kreiselschwader nach Anspruch 5 oder 6, **dadurch gekennzeichnet, dass** eine Drehachse (38) für das jeweilige erste Rechrad (30) über einen weiteren Lenker (39) an der Drehachse (32) für das jeweilige zweite Rechrad (31) angreift.

8. Kreiselschwader nach Anspruch 7, **dadurch gekennzeichnet, dass** die Drehachse (38) für das jeweilige erste Rechrad (30) über den jeweiligen Lenker (39) geschoben und federentlastet angelenkt ist.

9. Kreiselschwader nach einem der Ansprüche 1 bis 8, **dadurch gekennzeichnet, dass** an der gleichen Seite des Längsholms (22) angeordnete Rechräder (30, 31) mit teilweiser Überlappung parallel zueinander ausgerichtet sind.

10. Kreiselschwader nach einem der Ansprüche 1 bis 9, **dadurch gekennzeichnet, dass** an unterschiedlichen Seiten des Längsholms (22) angeordnete Rechräder (30, 31) in Richtung zu den Auslegerarmen (23) divergierend und zum Untergrund hin konvergierend ausgerichtet sind.

## Claims

1. Rotary rake (20)
having a base frame (21) comprising a longitudinal bar (22) and extension arms (23) arranged on both sides of the longitudinal bar (22), wherein the rotary rake is able to be coupled to a towing vehicle via a drawbar (25) that is attached to the longitudinal bar (22),
having rake rotors (26) that are driven in rotation about a respective rotor axis, have tine arms (27) with rake tines (28), and are mounted on the extension arms (23), having a swath turner (29) that is attached to the longitudinal bar (22) between the drawbar (25) and the extension arms (23) and has rake wheels (30, 31), wherein the swath turner (29) has, on each of the two sides of the longitudinal bar (12), a first rake wheel (30) with a first diameter, **characterized in that** the swath turner (29) has a respective second rake wheel (31) with a second diameter that is larger than the first diameter.

2. Rotary rake according to Claim 1, **characterized in that**, as seen in the longitudinal direction of the longitudinal bar (22), the second rake wheels (31) are arranged at least partially between the first rake wheels (30) and the extension arms (23).

3. Rotary rake according to Claim 1 or 2, **characterized in that**, as seen in the longitudinal direction of the longitudinal bar (22), the first rake wheels (30) are arranged at least partially between the second rake wheels (31) and the drawbar (25).

4. Rotary rake according to Claims 1 to 3, **characterized in that**, as seen in the longitudinal direction of the longitudinal bar (22), the first rake wheels (30) are arranged beneath the longitudinal bar (22) .

5. Rotary rake according to one of Claims 1 to 4, **characterized in that** a rotary axle (32) for the respective second rake wheel (31) is attached to the longitudinal bar (22) via a link (33).

6. Rotary rake according to Claim 5, **characterized in that** the rotary axle (32) for the respective second rake wheel (31) is articulated in a pulled and spring-balanced manner via the respective link (33).

7. Rotary rake according to Claim 5 or 6, **characterized in that** a rotary axle (38) for the respective first rake wheel (30) is attached to the rotary axle (32) for the respective second rake wheel (31) via a further link (39) .

8. Rotary rake according to Claim 7, **characterized in that** the rotary axle (38) for the respective first rake wheel (30) is articulated in a pushed and spring-balanced manner via the respective link (39).

9. Rotary rake according to one of Claims 1 to 8, **characterized in that** rake wheels (30, 31) arranged on the same side of the longitudinal bar (22) are oriented parallel to one another with a partial overlap.

10. Rotary rake according to one of Claims 1 to 9, **characterized in that** rake wheels (30, 31) arranged on different sides of the longitudinal bar (22) are oriented so as to diverge in the direction of the extension arms (23) and to converge towards the underlying surface.

## Revendications

1. Andaineur (20),
avec un châssis de base (21) comprenant un longeron (22) ainsi que des bras de flèche (23) disposés de part et d'autre du longeron (22), l'andaineur pouvant être couplé à un véhicule tracteur par une barre d'attelage (25) s'engageant sur le longeron (22),
avec des rotors de ratissage (26) comportant des bras porte-dents (27) avec des dents de ratissage (28) entraînés en rotation autour d'un axe de rotation respectif, qui sont montés sur les bras de flèche (23), avec un dispositif de retournement d'andains (29) s'engageant sur le longeron (30) entre la barre d'attelage (25) et les bras de flèche (23), comportant des roues de ratissage (22, 31)
le dispositif de retournement d'andains (29) comportant, de part et d'autre du longeron (12), respectivement une première roue de ratissage (30) avec un premier diamètre, **caractérisé en ce que** le dispositif de retournement d'andains (29) comporte une deuxième roue de ratissage (31) avec un deuxième diamètre, qui est supérieur au premier diamètre.

2. Andaineur selon la revendication 1, **caractérisé en ce que** les deuxièmes roues de ratissage (31), vues dans le sens longitudinal du longeron (22), sont disposées au moins par sections entre les premières roues de ratissage (30) et les bras de flèche (23).

3. Andaineur selon la revendication 1 ou 2, **caractérisé en ce que** les premières roues de ratissage (30), vues dans le sens longitudinal du longeron (22), sont disposées au moins par sections entre les deuxièmes roues de ratissage (31) et la barre d'attelage (25).

4. Andaineur selon les revendications 1 à 3, **caractérisé en ce que** les premières roues de ratissage (30), vues dans le sens longitudinal du longeron (22), sont disposées en dessous du longeron (22).

5. Andaineur selon l'une des revendications 1 à 4, **caractérisé en ce qu'**un axe de rotation (32) pour la deuxième roue de ratissage (31) respective s'engage sur le longeron (22) par une bielle (33).

6. Andaineur selon la revendication 5, **caractérisé en ce que** l'axe de rotation (32) pour la deuxième roue de ratissage (31) respective est tiré par la bielle (33) et est articulé de manière compensée par ressort.

7. Andaineur selon la revendication 5 ou 6, **caractérisé en ce qu'**un axe de rotation (38) pour la première roue de ratissage (30) respective s'engage par une autre bielle guidon (39) sur l'axe de rotation (32) pour la deuxième roue de ratissage (31) respective.

8. Andaineur selon la revendication 7, **caractérisé en ce que** l'axe de rotation (38) pour la première roue de ratissage (30) respective est poussé par la bielle (39) respective et est articulé de manière compensée par ressort.

9. Andaineur selon l'une des revendications 1 à 8, **caractérisé en ce que** des roues de ratissage (30, 31) disposées sur le même côté du longeron (22) sont orientées parallèlement les unes par rapport aux autres avec un chevauchement partiel.

10. Andaineur selon l'une des revendications 1 à 9, **caractérisé en ce que** des roues de ratissage (30, 31) disposées sur différents côtés du longeron (22) sont orientées de manière divergente en direction des bras de flèche (23) et de manière convergente vers le sol.
